# EUROPÄISCHE PATENTSCHRIFT

(11) **EP 0 679 618 B1**
(45) Veröffentlichungstag und Bekanntmachung des Hinweises auf die Patenterteilung: **20.08.1997**
(21) Anmeldenummer: 95105990.6
(22) Anmeldetag: 21.04.1995
(51) Int. Cl.: C06D 5/06, B60R 21/26

(54) **Pyrotechnische Ladung zur Freigabe von eingeschlossenem Druckgas**
Pyrotechnical charge for releasing stored gas from a pressure vessel
Charge pyrotechnique pour la libération d'un gaz stocké dans un réservoir sous pression

(30) Priorität: 30.04.1994 DE 4415255
(43) Veröffentlichungstag der Anmeldung: 02.11.1995
(73) Patentinhaber: FRAUNHOFER-GESELLSCHAFT ZUR FÖRDERUNG DER ANGEWANDTEN FORSCHUNG E.V., 80636 München (DE)
(72) Erfinder: Schedlbauer, Fritz, Dr. Dipl.-Chem, D-76327 Pfinztal 1 (DE)

(56) Entgegenhaltungen:
- EP-A- 0 365 809
- EP-A- 0 591 119
- WO-A-93/21042
- FR-A- 2 158 779
- FR-A- 2 234 246
- GB-A- 2 264 942
- US-A- 3 679 781
- US-A- 3 930 666
- US-A- 4 092 188
- US-A- 5 016 914

## Beschreibung

Die Erfindung betrifft eine pyrotechnische Ladung zum schnellen Öffnen eines Berstverschlusses eines Druckgasbehälters zum Überführen des Druckgases in einen anderen Raum niedrigeren Drucks.

Die Bereitstellung von Druckgas zum schlagartigen Füllen eines Raums mit vorher niedrigerem Druck, z.B. Umgebungsdruck, spielt eine zunehmende Rolle bei Rückhaltesystemen in Kraftfahrzeugen, den sogenannten Airbags. Hierfür sind bisher im wesentlichen drei Systeme bekannt.

Bei dem ersten System wird das Füllgas unmittelbar bei Bedarf durch eine chemische Reaktion erzeugt. Dies setzt Substanzen voraus, die im Augenblick ihrer Reaktion große Gasmengen erzeugen, im Ausgangszustand aber einen geringen Raumbedarf haben. Hierfür bieten sich Feststofftreibmittel an, jedoch nur solche, die ausschließlich oder überwiegend Inertgas erzeugen, um die Fahrzeuginsassen nicht einer toxischen Gefährdung auszusetzen. In der Praxis ist bisher überwiegend Natriumacid (N₂-Erzeugung) verwendet worden (DE 22 36 175). Aufgrund der hohen Reaktionstemperatur im Bereich von 1500°C sind am eigentlichen Rückhaltesystem, z.B. dem Sackmaterial, besondere Wärmeschutzmaßnahmen erforderlich. Ferner muß das Sackmaterial unverbrannte Partikel des Treibstoffs zurückhalten können. Nach der Auslösung verbleibende Treibstoffreste sind stark toxisch. Die Toxizität von Natriumacid stellt bei der Verwendung in Kraftfahrzeugen im übrigen ein latentes Umweltrisiko dar und erfordert besondere Maßnahmen bei der KFZ-Entsorgung.

Statt Natriumacid sind auch schon Treibstoffe aus monomeren und polymeren Salpetersäureestern vorgeschlagen worden (DE 2 329 558) , bei denen jedoch noch höhere Gastemperaturen zu beherrschen sind und insbesondere ein hoher Anteil an toxischem CO anfällt, das zudem bei Vorhandensein von Wasserstoff zu brennbaren Gemischen führen kann. Auch ist die thermische Stabilität von NC nicht befriedigend. Ferner sind Gasgeneratormischungen für Airbags bekannt (EP 0 591 119), die aus energiereichen Nitraminen, wie Hexogen (RDX) oder Oktogen (HMX), Nitrocellulose (NC) und einem Binder, insbesondere Celluloseacetobutyraten (CAB) oder auch einem Glycidyl-Azid-Polymer (GAP) bestehen. Bei dieser Mischung ist zwar der NC-Anteil reduziert, doch treten die vorgenannten Nachteile in lediglich verringertem Ausmaß auf. Schließlich ist es bei solchen Gasgeneratoren für Airbags bekannt (DE 40 05 871), das Anzündmittel, die gaserzeugende Mischung und einen Filter in hintereinander angeordneten Kammern innerhalb des Luftsacks anzuordnen. Die Überströmöffnung zwischen der Brennkammer und der Filterkammer ist durch eine Folie geschlossen, die die Mischung vor Umwelteinflüssen schützt und nach dem Anzünden und Erreichen eines gewissen Drucks in der Brennkammer aufreißt.

Es sind ferner Hybridsysteme bekannt (WO 91/11347, US 5 016 914), bei denen neben einem gespeicherten, inerten Druckgas, ein gaserzeugendes Treibmittel eingesetzt wird. Das Treibmittel wird bei Auslösung gezündet und das durch die chemische Reaktion entwickelte Gas zusammen mit dem Inertgas in das Rückhaltesystem überführt. Hier sind die oben geschilderten Nachteile, wenn auch in abgeschwächtem Ausmaß zu beobachten.

Bei dem dritten System wird ausschließlich gespeichertes nicht-toxisches Druckgas verwendet, das aus dem mit einem Berstverschluß ausgestatteten Druckgasspeicher in das Rückhaltesystem überführt wird. Diese Systeme haben zwar einen relativ großen Raumbedarf, sind jedoch unter sicherheitstechnischen und umwelttechnischen Gesichtspunkten zu bevorzugen. Dieses System erfordert einen im Bereich von Millisekunden wirksamen Öffnungsmechanismus für den Berstverschluß am Druckbehälter. Da beim Überströmvorgang vom Druckgasbehälter in das Rückhaltesystem das Gas aufgrund des Joul Thomson-Effekts abkühlt und es zu Vereisungen kommen kann, muß ferner durch den Öffnungsmechanismus entsprechende Wärme zugeführt werden.

Der Erfindung liegt die Aufgabe zugrunde, eine pyrotechnische Ladung vorzuschlagen, die bei kleinstem Raumbedarf eine Freigabe des im Druckbehälter gespeicherten Gases durch Zerstören der Berstscheibe im Millisekundenbereich ermöglicht und außerdem den Joul Thomson-Effekt kompensiert.

Diese Aufgabe wird erfindungsgemäß durch die Merkmale des Patentanspruchs 1 gelöst. Die hierbei eingesetzten kristallinen Nitramine Hexogen (RDX) oder Oktogen (HMX), sind hochenergetische Stoffe, die sich durch große Lagerstabilität, insbesondere auch durch große thermische Stabilität auszeichnen und im übrigen handhabungs- und betriebssicher sind, da sie nicht ohne weiteres durch Reibung oder Druck initiiert werden können. Die dispers vorliegenden Nitramine sind in einer energiereichen, reaktiven Polymermatrix aus di- oder polyfunktionalem Glycidyl-Azid-Polymer (GAP) eingebunden. Diese Polymere, die bei Treibstoffen an sich bekannt sind, zeichnen sich durch ihren hohen Energieinhalt bei gleichwohl guter Bindefähigkeit aus. Zur Polymerisation dienen Diisocyanate. Die pyrotechnische Ladung weist ferner energiereiche gasbildende Substanzen aus Nitroguanidin (NQ) oder Triaminoguanidinnitrat (TAGN) auf, die zur Erhöhung der bei der Reaktion entstehenden Gasmenge und damit des Druckaufbaus führen. Mit dem weiterhin vorgesehenen Tetracen wird die Zündverzugszeit der Ladung verkürzt.

Mit Hilfe dieser pyrotechnischen Ladung kann nach dem Zünden in Millisekunden ein ausreichend hoher Gasdruck aufgebaut werden, um die Berstscheibe zu öffnen, wobei die Reaktion aufgrund des Binders aber nicht explosionsartig erfolgt, sondern über etwa 10 Millisekunden abläuft, so daß die bei der exothermen Reaktion anfallende Wärme das an der zerstörten Berstscheibe vorbeiströmende Druckgas ausreichend aufheizt, um dieses beispielsweise im Bereich der Umgebungstemperatur zu halten. Auf der anderen Seite kann diese Ladung durch die erfindungsgemäße Auswahl von Energieträger und Binder so klein gehalten werden, daß eventuell entstehende toxische Gase mit dem überströmenden Druckgas, z.B. Luft, in einem solchen Maß verdünnt werden, daß sie physiologisch unbedenklich sind. Im Gegensatz zu den bisher eingesetzten gasliefernden Stoffen entstehen keine Partikel und keine Verbrennungsrückstände. Die erfindungsgemäße Ladung behält ihre Funktion auch bei hoher Temperaturwechselbeanspruchung und sie läßt sich problemlos in die z.B. bei Airbags vorgegebene Massenfertigung einbinden, da ihre Komponenten trotz der Energieträger vergleichsweise leicht zu Granulat oder Formkörpern, z.B. Lochzylinder, zu verarbeiten sind. Da die pyrotechnische Ladung aufgrund ihrer Energiedichte nur in kleiner Menge eingebaut werden muß, stellt sie auch keine sonderlichen Probleme für die Entsorgung dar.

Es sind zwar Raketenfesttreibstoffe (EP 0 365 809) und Treibladungspulver (GB 2 264 942) bekannt, bei denen als Energieträger RDX, HMX oder NQ und als Binder GAP eingesetzt werden, doch stehen hier andere Ziele im Vordergrund. Dies gilt auch für solche Festtreibstoffe (US 3 679 781), die auf Nitrocellulosebasis aufgebaut sind und lediglich Zusätze hochenergetischer Explosivstoffe enthalten, wie RDX, HMX oder Tetracen. Bei allen diesen Zusammensetzungen spielt die Toxizität keine oder eine nur untergeordnete Rolle, wie es auch nicht darauf ankommt, im Millisekundenbereich große Gasmengen zu erzeugen oder gar den Joule-Thomson Effekt zu vermeiden.

Die pyrotechnische Ladung kann ferner einen energiereichen Weichmacher für das Polymer aufweisen, z.B. Bis-2,2-Dinitropropyl-acetal (BDNPA) oder -formal (BDNPF).

Auch der Weichmacher trägt also zur Erhöhung des Energieinhaltes der gesamten Komposition bei.

Die vorgenannte pyrotechnische Ladung kann allein in dieser Zusammensetzung erfolgreich eingesetzt werden. Bei großen Gasmengen, kleinen Überströmquerschnitten etc. kann es sich empfehlen, neben der vorgenannten Druckladung zusätzlich eine wärmeliefernde Ladung vorzusehen. Hierbei sollte die Druckladung den Berstverschluß im Bereich von 2 ms öffnen und einen Druck im Bereich von 1200 bar erzeugen.

Eine solche wärmeliefernde Ladung kann sich beispielsweise auszeichnen durch einen geringeren Gehalt an kristallinem Energieträger und einen höheren Gehalt an gasbildender Substanz. Stattdessen ist es auch möglich, etwa den gleichen Gehalt an kristallinem Energieträger vorzusehen, dann jedoch einen Binder mit geringerem Energieinhalt einzusetzen. Hierfür bietet sich beispielsweise Hydroxyl-endgruppenhaltiges Polybutadien an. Die wärmeliefernde Ladung sollte eine Brenndauer von ca. 20 ms bei einem Druck von ca. 600 bar haben.

Die nachfolgenden Zusammensetzungen 1 bis 3 weisen auf geeignete Mengen für jede Komponente der pyrotechnischen Ladung hin, während die Zusammensetzung 4 ein besonders vorteilhaftes Ausführungsbeispiel für die pyrotechnische Ladung nach den Patentansprüchen wiedergibt.

| **Zusammensetzung 1:** | | **Zusammensetzung 2** | |
|---|---|---|---|
| Polyglycidylazid | 13,5 % | Polyglycidylazid | 13,5 % |
| Oktogen | 85,7 % | Oktogen | 75,7 % |
| Diisocyanat | 1,7 % | Diisocyanat | 1,7 % |
| Benetzer | 0,1 % | Benetzer | 0,1 % |
| | | NQ/TAGN | 8,0 % |
| | | BDNPA/BDNPF | 2,0 % |

| **Zusammensetzung 3:** | | **Zusammensetzung 4** | |
|---|---|---|---|
| Druckladung | | | |
| Polyglycidylazid | 13,5 % | Polyglycidylazid | 13,5 % |
| Oktogen | 83,7 % | Oktogen | 84,7 % |
| Diisocyanat | 1,7 % | Diisocyanat | 1,7 % |
| Benetzer | 0,1 % | Benetzer | 0,1 % |
| BDNPA/BDNPF | 2,0 % | Tetrazen | 1,0 % |

| Heizladung | | | |
|---|---|---|---|
| Polyglycidylazid | 14,0 % | HTPB | 12,5 % |
| Oktogen | 60,0 % | Oktogen | 81,0 % |
| Diisocyanat | 2,0 % | Diisocyanat | 1,4 % |
| Benetzer | 0,1 % | Benetzer | 0,1 % |
| NQ/TAGN | 23,9 % | NQ/TAGN | 5,0 % |

Während die Zusammensetzungen 1 und 2 ausschließlich eine pyrotechnische Ladung hoher Energiedichte definieren, stellen die Zusammensetzungen 3 und 4 eine Kombination einer Druckladung ähnlich den Zusammensetzungen 1 und 2 mit einer wärmeliefernden Ladung dar, die entweder bei geringerem Gehalt an Energieträger einen höheren Gehalt an gasbildenen Substanzen oder bei etwa gleichem Gehalt an Energieträger einen weniger energiereichen Binder enthält. Das beigefügte Diagramm zeigt die Druck-/Zeitkurve für eine solche kombinierte Druck-/Heizladung. Die Kurve a zeigt den zeitlichen Druckverlauf der Druckladung, die Kurve b den Verlauf für die Heizladung.

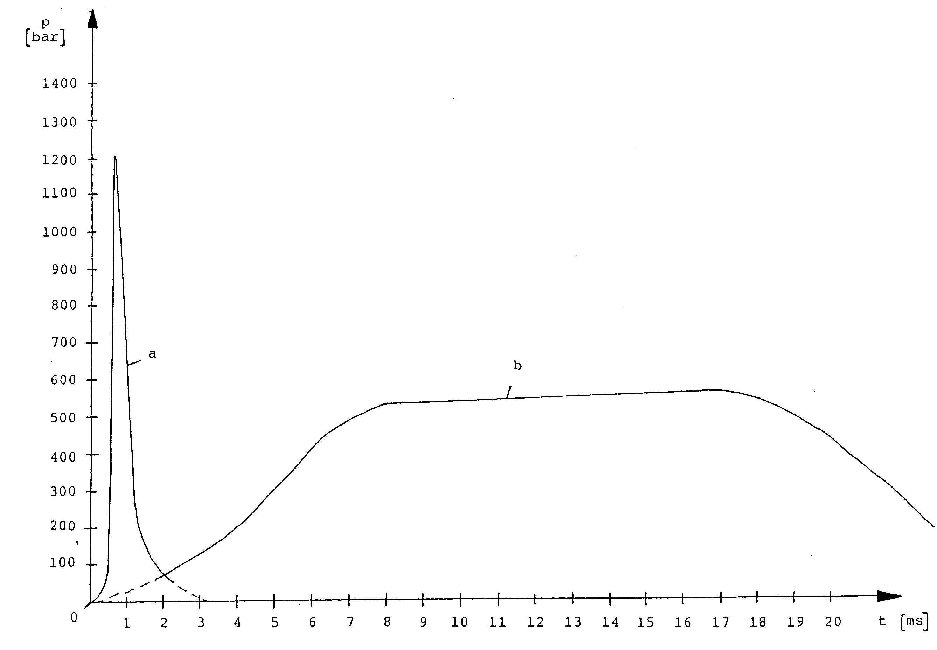

## Patentansprüche

1. Pyrotechnische Ladung zum schnellen Öffnen eines Berstverschlusses eines Druckgasbehälters zum Überführen des Druckgases in einen anderen Raum niedrigeren Drucks, enthaltend einen Energieträger aus kristallinem Hexogen (RDX) oder Oktogen (HMX), ein di- oder polyfunktionales Glycidyl- Azid-Polymer (GAP) als Binder, Nitroguanidin (NQ) oder Triaminoguanidinnitrat (TAGN) als energiereiche gasbildende Substanz und Tetrazen zur Verkürzung der Zündungsverzugszeit.

2. Pyrotechnische Ladung nach Anspruch 1, gekennzeichnet durch einen energiereichen Weichmacher für das Polymer.

3. Pyrotechnische Ladung nach Anspruch 2, dadurch gekennzeichnet, daß der energiereiche Weichmacher Bis-2,2-Dinitropropyl-acetal (BDNPA) oder -formal (BDNPF) ist.

4. Pyrotechnische Ladung nach einem der Ansprüche 1 bis 3, dadurch gekennzeichnet, daß sie zusätzlich eine wärmeliefernde Ladung aufweist.

5. Pyrotechnische Ladung nach einem der Ansprüche 1 bis 4, dadurch gekennzeichnet, daß die wärmeliefernde Ladung einen geringeren Gehalt an kristallinem Energieträger und einen höheren Gehalt an gasbildender Substanz aufweist.

6. Pyrotechnische Ladung nach einem der Ansprüche 1 bis 5, dadurch gekennzeichnet, daß die wärmeliefernde Ladung etwa gleichen Gehalt an kristallinem Energieträger und einen Binder mit geringerem Energiegehalt aufweist.

7. Pyrotechnische Ladung nach Anspruch 6, dadurch gekennzeichnet, daß der Binder hydroxyl-endgruppenhaltiges Polybutadien ist.

## Claims

1. Pyrotechnic charge for rapid opening of a rupture closure of a compressed air container for transferring the compressed gas into another area of lower pressure, containing an energy carrier of crystalline hexogen (RDX) or octogen (HMX), di- or poly-functional glycidil-azide polymer (GAP) as a binder, nitroguanidine (NQ) or triaminoguanindine nitrate (TAGN) as an energy-rich gas-forming substance, and tetrazene for shortening the ignition delay time.

2. Pyrotechnic charge according to claim 1, characterised by an energy-rich plasticiser for the polymer.

3. Pyrotechnic charge according to claim 2, characterised in that the energy-rich plasticiser is bis-2,2-dinitropropyl-acetal (BDNPA) or -formal (BDNPF).

4. Pyrotechnic charge according to one of claims 1 to 3, characterised in that it has in addition a heat-providing charge.

5. Pyrotechnic charge according to one of claims 1 to 4, characterised in that the heat-providing charge has a smaller content of crystalline energy carrier and a higher content of gas-forming substance.

6. Pyrotechnic charge according to one of claims 1 to 5, characterised in that the heat-providing charge has roughly the same content of crystalline energy carrier and a plasticiser with a lower energy content.

7. Pyrotechnic charge according to claim 6, characterised in that the binder is polybutadiene containing hydroxyl terminal groups.

## Revendications

1. Charge pyrotechnique pour ouvrir rapidement une obturation à éclatement d'un récipient de gaz sous pression pour transférer le gaz sous pression dans une autre chambre sous pression plus faible, contenant un support d'énergie constitué d'hexogène cristallin (RDX) ou d'octogène (HMX), d'un polymère di- ou polyfonctionnel glycidyl-azide (GAP) comme liant, de nitroguanidine (NQ) ou de nitrate de triaminoguanidine (TAGN) comme substance formant des gaz riche en énergie et du tétrazène pour raccourcir la durée de retard à l'allumage.

2. Charge pyrotechnique selon la revendication 1,
caractérisée par
un plastifiant riche en énergie du polymère.

3. Charge pyrotechnique selon la revendication 2,
caractérisée en ce que
le plastifiant riche en énergie est du bis-dinitropropylacétal (BDNPA) ou -formal (BDNPF).

4. Charge pyrotechnique selon l'une des revendications 1 à 3,
caractérisée en ce qu'
elle comprend en plus une charge fournissant de la chaleur.

5. Charge pyrotechnique selon l'une des revendications 1 à 4,
caractérisée en ce que
la charge fournissant de la chaleur présente une teneur plus faible en support d'énergie cristallin et une teneur plus élevée en substance formant des gaz.

6. Charge pyrotechnique selon l'une des revendications 1 à 5,
caractérisée en ce que
la charge fournissant la chaleur présente une teneur à peu près équivalente en support d'énergie et a un liant à teneur en énergie plus faible.

7. Charge pyrotechnique selon la revendication 6,
caractérisée en ce que
le liant est du polybutadiène contenant des groupes termimaux hydroxydes.
